# EUROPÄISCHE PATENTSCHRIFT

(11) **EP 2 906 437 B1**
(45) Veröffentlichungstag und Bekanntmachung des Hinweises auf die Patenterteilung: **13.03.2019**
(21) Anmeldenummer: 13766018.9
(22) Anmeldetag: 19.09.2013
(51) Int. Cl.: B60G 13/00, B62D 65/12

(54) **BEFESTIGUNGSANORDNUNG EINES SCHWINGUNGSDÄMPFERS AN EINEM RADTRÄGER**
ARRANGEMENT FOR FASTENING A VIBRATION DAMPER TO A WHEEL CARRIER
SYSTÈME DE FIXATION D'UN AMORTISSEUR DE VIBRATIONS SUR UN SUPPORT DE ROUE

(30) Priorität: 10.10.2012 DE 102012218458
(43) Veröffentlichungstag der Anmeldung: 19.08.2015
(73) Patentinhaber: Bayerische Motoren Werke Aktiengesellschaft, 80809 München (DE)
(72) Erfinder: KÖTZINGER, Georg, 83334 Inzell (DE); WILHELM, Wolfgang, 80809 München (DE)
(86) Internationale Anmeldenummer: PCT/EP2013/069493
(87) Internationale Veröffentlichungsnummer: WO 2014/056700

(56) Entgegenhaltungen:
- EP-A1- 1 188 948
- DE-A1- 10 108 686
- DE-A1- 10 327 556
- US-A- 2 122 839

## Beschreibung

Die Erfindung betrifft eine Befestigungsanordnung eines Schwingungsdämpfers, beispielsweise einer Dämpfer-Tragfeder-Einheit, an einem Radträger und/oder am Aufbau eines Fahrzeugs nach dem Oberbegriff des Anspruchs 1. Zum Stand der Technik wird neben der 10 2010 029 032 A1, in der ein über ein Gummilager mittels einer Schraube an einem Radträger befestigter Schwingungsdämpfer gezeigt ist, auf US 2 122 839 A und EP 1 188 948 A1 sowie DE 101 08 686 A1 verwiesen.

Im Zuge der Herstellung eines Kraftfahrzeugs, insbesondere Personenkraftwagens, werden üblicherweise die Komponenten des Fahrwerks vormontiert, und zwar an einem sog. Achsträger, welcher später mit dem Fahrzeugaufbau zusammengefügt wird, was gemeinhin als "Hochzeit" bezeichnet wird. Im nicht zusammengefügten Zustand des vormontierten Fahrwerks sind die Tragfedern, auf welchen der Fahrzeug-Aufbau (= Karosserie) im zusammengefügten Zustand abgestützt ist, vollkommen entlastet. Nach dem Zusammenbau von Fahrzeug-Aufbau und Achsträger werden dann, wenn das Fahrzeug nach der besagten Hochzeit und ggf. weiteren Montageschritten, die am an einer Förderanlage aufgehängten Fahrzeug durchgeführt werden, auf dem Boden abgestellt wird, die Tragfedern mit dem Gewicht der Karosserie belastet und damit um ein gewisses Maß komprimiert. Entsprechendes gilt für die den Tragfedern funktional parallel geschalteten Schwingungsdämpfer - diese werden im weiteren auch nur als "Dämpfer" bezeichnet -, die (in der Linearbauart) damit zumeist von einem weit ausgefahrenen Zustand in einen teilweise eingefahrenen Zustand in der Umgebung der Mittellage verfahren werden.

Nach dem Zusammenfügen von Fahrzeug-Aufbau und vormontiertem Achsträger mit daran befestigten Radträgern und der soeben genannten mit dem erstmaligen Abstellen des komplettierten Fahrzeugs auf seinen Rädern erfolgenden Zustandsänderung der Tragfedern und der Dämpfer werden die Radträger quasi von einer relativ weit ausgefederten Position zumindest annähernd in ihre sog. Konstruktionslage überführt. Letztere, d.h. den "Sollhöhenstand" nehmen sie bekanntlich erst dann ein, wenn der Fahrzeug-Aufbau durch gegebene Zusatz-Gewichte, wie befülltem Kraftstofftank und einem Insassen, quasi genormt belastet ist.

Üblicherweise verändert sich bei solchen Veränderungen des Höhenstandes des Radträgers gegenüber dem Fahrzeugaufbau die Position des Radträgers, die durch Sturzwinkel, Spurwinkel und Nachlaufwinkel beschreibbar ist. Dies führt an einem über ein Gummilager mit einer Schraube oder dgl. an einem Radträger und/oder am Fahrzeug-Aufbau befestigten Dämpfer dazu, dass dieses Gummilager ausgehend von einem während der Montage mit unbelasteten Tragfedern im wesentlichen spannungsfreien Zustand in einen geringfügig verspannten Zustand überführt wird, wenn die Tragfedern mit dem Gewicht des Fahrzeug-Aufbaus belastet werden oder sind. Ein zwischen den beiden Buchsen des bzw. der genannten und hinsichtlich seines/ihres grundsätzlichen Aufbaus üblichen Gummilagers/Gummilagern vorgesehenes Elastomerelement ist somit bereits in der genannten Konstruktionslage geringfügig verspannt bzw. spannungsbelastet, was sich auf den Fahrkomfort des Fahrzeugs - wenn auch nur geringfügig - negativ auswirken kann.

In den eingangs genannten Schriften, die sich nicht mit der vorstehend geschilderten Problematik befassen, sind verschiedene Konzepte dafür dargestellt, wie ein Schwingungsdämpfer über ein übliches, wie bekannt aus zwei konzentrisch angeordneten Buchsen mit einem dazwischen vorgesehen Elastomerelement bestehendes Gummilager an einem Lenkerarm oder dgl. befestigt werden kann. Dabei ist - aus unterschiedlichen Gründen - jeweils der Drehfreiheitsgrad derjenigen Buchse dieses Gummilagers, über die das Gummilager mittels einer Schraube befestigt wird, um diese besagte Achse durch eine zusätzliche Maßnahme blockiert. Diese zusätzliche Maßnahme wirkt dabei während des Montageprozesses des Gummilagers bereits dann, wenn die besagte Schraube noch nicht vollständig festgezogen aber bereits positioniert ist und somit das Gummilager zunächst nur in den drei Längsfreiheitsgraden festgelegt ist. Realisiert ist diese Maßnahme üblicherweise durch Formschluss, nämlich durch eine Längsverzahnung (vgl. US 2,122,839) oder durch eine Stirnverzahnung (vgl. EP 1 188 948 A1). Bei der weiterhin als Stand der Technik genannten DE 101 08 686 A1 ist eine vergleichbare Wirkung durch eine übliche Anordnung bzw. Ausrichtung der besagten Schraube dargestellt.

Eine Abhilfemaßnahme für die vor der vorstehenden Würdigung des Standes der Technik geschilderte Problematik, mit welcher sich dieser genannte Stand der Technik überhaupt nicht befasst, aufzuzeigen, ist Aufgabe der vorliegenden Erfindung.

Die Lösung dieser Aufgabe besteht in einer Befestigungsanordnung eines Schwingungsdämpfers an einem Radträger und/oder am Aufbau eines Fahrzeugs über ein Gummilager mittels einer Schraube oder dgl., durch die eine der beiden Buchsen des Gummilagers in den bzw. ihren drei Längsfreiheitsgraden bezüglich des Radträgers festgelegt ist, wobei an der besagten Gummilager-Buchse sowie am Radträger und/oder am Fahrzeug-Aufbau eine Maßnahme vorgesehen ist, durch welche der Drehfreiheitsgrad dieser Gummilager-Buchse um die Achse der Schraube oder dgl. durch Formschluss entweder blockiert oder auf ein bestimmtes Winkelsegment beschränkt ist, und wobei sich bei Veränderungen des Höhenstandes des Radträgers gegenüber dem Fahrzeugaufbau dessen durch Sturzwinkel, Spurwinkel und Nachlaufwinkel beschriebene Position ändert. Dabeiist die besagte formschlüssige Blockade-Maßnahme oder Beschränkung des Drehfreiheitsgrades solchermaßen vorgesehen oder ausgebildet oder angeordnet, dass bei der Montage des Schwingungsdämpfers am Radträger bzw. am Fahrzeug-Aufbau ohne Belastung des Radträgers durch den Fahrzeug-Aufbau der Schwingungsdämpfer für ein exaktes Verspannen bzw. Fixieren durch die Schraube oder dgl. gegenüber dem Radträger und/oder dem Fzg.-Aufbau im Falle der Blockade solchermaßen positioniert ist oder im Falle der Beschränkung des Drehfreiheitsgrades an einem Anschlag der formschlüssigen Beschränkung solchermaßen positionierbar ist, dass das Gummilager, genauer dessen Elastomerelement, in Konstruktionslage, d.h. mit einer Norm-Belastung des Radträgers durch den Fahrzeug-Aufbau, jedenfalls bezüglich des genannten Drehfreiheitsgrades zumindest annähernd spannungsfrei ist.

Erfindungsgemäß kann der Dämpfer über das Gummilager, welches üblicherweise eine äußere mit dem Dämpfergehäuse im wesentlichen starr verbundene Außen-Buchse und eine innere über die besagte Schraube oder dgl. mit dem Radträger bzw. dem Fzg.-Aufbau im wesentlichen starr verbundene Innen-Buchse und zwischen diesen beiden Buchsen ein ringförmiges Elastomerelement aufweist, in einer definierten Lage oder Position am Radträger und/oder am Fahrzeug-Aufbau montiert werden. Vorzugsweise ist diese Lage bzw. Position des Dämpfers und somit auch des Gummilagers mit seinen genannten Buchsen und dem dazwischen liegenden Elastomerelement solchermaßen definiert oder festgelegt, dass das Elastomerelement des Gummilagers dann, wenn im Zuge der o.g. "Hochzeit", d.h. des Zusammenfügens von Fahrzeug-Aufbau und vormontiertem Achsträger, der Dämpfer mit seinen beiden Enden fest am Fahrzeug-Aufbau einerseits und am Radträger andererseits befestigt ist oder wird, ohne dass der Radträger anteilig durch das Gewicht des Fahrzeug-Aufbaus belastet ist, das Elastomerelement des Gummilagers in Rotationsrichtung um die Drehachse der das Gummilager fixierenden Schraube betrachtet geringfügig in sich verspannt ist. Diese beim Festlegen der Dämpfer-Position gegenüber Fahrzeug-Aufbau und Radträger ohne Belastung des Radträgers durch den Fahrzeug-Aufbau aufgebrachte Verspannung im Elastomerelement ist durch die besagte definierte Montage-Position solchermaßen gewählt bzw. festgelegt, dass diese Verspannung zumindest annähernd dann selbsttätig abgebaut wird, wenn der Radträger anteilig, d.h. mit seinem Anteil (im Falle eines üblichen Personenkraftwagens sind dies ca. 25%) durch den Fahrzeug-Aufbau belastet wird und damit seine Konstruktionslage bezüglich des Fahrzeug-Aufbaus einnimmt. Bei der Befestigung oder Montage des Dämpfers zwischen Fahrzeug-Aufbau und Radträger wird somit ohne Belastung der dem Dämpfer zugeordneten Tragfeder im zugehörigen Dämpfer-Gummilager eine Spannung aufgebaut, die später durch Norm-Belastung der Tragfeder, mit welcher der Radträger seine Konstruktionslage gegenüber dem Fahrzeug-Aufbau einnimmt bzw. in diese gelangt, selbsttätig abgebaut wird.

Die kennzeichnenden Merkmale des Anspruchs 1 sind nun besonders gut dafür geeignet, dass in der Serienfertigung von Kraftfahrzeugen zuverlässig in der vorhergehend beschriebenen Weise, d.h. gemäß dem vorhergehend beschriebenen Verfahren vorgegangen wird bzw. vorgegangen werden kann. Zwar ist es theoretisch grundsätzlich möglich, einen über ein Gummilager an einem Radträger und/oder am Fahrzeug-Aufbau befestigten Schwingungsdämpfer auch ohne Blockade-Maßnahme oder Beschränkung des Drehfreiheitsgrades auf ein bestimmtes Winkelsegment durch Formschluss in einer solchen bestimmten Position fest am Radträger bzw. Fzg.-Aufbau zu montieren, dass bei Montage der Schwingungs-Dämpfer zwischen den Radträgern und dem Fahrzeug-Aufbau mit nicht belasteten Tragfedern eine gewünschte Vorspannung in den Elastomerelementen der Dämpfer-Gummilager erzeugt wird, jedoch ist in der Großserienfertigung nur dann sicher gewährleistet, dass bei der Dämpfer-Montage ohne Belastung der zugehörigen Tragfeder tatsächlich im besagten jeweiligen Elastomerelement die gewünschte Vorspannung erzeugt wird, wenn die Position des Dämpfers gegenüber dem Radträger und dem Fzg.-Aufbau bei der Montage zumindest im wesentlichen vorgegeben ist und diese Position auch exakt eingehalten wird. Letzteres ist dann sichergestellt, wenn der Dämpfer entweder nur in einer bestimmten Position oder Lage (= "Soll-Position") in erfindungsgemäßer Weise am Radträger oder am Fzg.-Aufbau befestigt werden kann oder zunächst nur in einem bestimmten Winkelsegment, welches sich bspw. über 25° erstreckt, vorpositioniert und anschließend in der durch einen Anschlag definierten Soll-Position endgültig montiert wird.

Dies, nämlich eine Befestigungsmöglichkeit nur in einer bestimmten Soll-Position, ist für eine Großserienfertigung durch Formschluss oder durch einen exakt definierten Anschlag, der durch eine(n) der Grenzen oder Ränder eines durch Formschluss beschränkten Winkelsegments gebildet ist, relativ einfach darstellbar. Insofern ist die formschlüssige Blockade des Drehfreiheitsgrades der mit einer bzw. der Schraube am Radträger und/oder am Fzg.-Aufbau zu befestigenden Gummilager-Buchse in einer ersten Alternative der vorliegenden Erfindung das wesentliche Merkmal, für welches Patentschutz beantragt wird. Nach einer zweiten Alternative der vorliegenden Erfindung ist der besagte Drehfreiheitsgrad durch Formschluss auf ein bestimmtes Winkelsegment, welches vorzugsweise oder sinnvollerweise nicht größer als 45° und nicht kleiner als 5° sein sollte, beschränkt. Die örtliche bzw. räumliche Festlegung der formschlüssigen Blockade oder des besagten Anschlags, welcher durch eine(n) der Grenzen oder Ränder eines durch Formschluss beschränkten Winkelsegments gebildet ist, und die oder der in Anspruch 2 näher beschrieben ist, stellt hingegen einen bevorzugten Anwendungsfall für die grundlegende Erfindung dar, den Drehfreiheitsgrad der vorzugsweise Innen-Buchse des Gummilagers, mit welchem ein Schwingungsdämpfer an einem Radträger im Fahrwerk eines Fahrzeugs, insbesondere Personenkraftwagens, und/oder am Fzg.-Aufbau befestigt wird, zu blockieren bzw. auf ein bestimmtes Winkelsegment zu beschränken. Grundsätzlich könnte jedoch auch Patentschutz für das soweit bereits beschriebene Verfahren beansprucht werden, nämlich einen Dämpfer solchermaßen zu montieren, dass ohne Belastung der zugeordneten Tragfeder im den Dämpfer tragenden Gummilager bzw. in dessen Elastomerelement eine Spannung aufgebaut wird, die mit der Belastung der zugeordneten Tragfeder selbsttätig im wesentlichen abgebaut wird, so dass das Elastomer-Element mit einer Norm-Belastung und somit in Konstruktionslage bezüglich des durch die besagte Schraube blockierten Drehfreiheitsgrades des Gummilagers im wesentlichen spannungsfrei ist.

Grundsätzlich bestehen verschiedene Möglichkeiten für die Darstellung eines den Drehfreiheitsgrad des Gummilagers bzw. der besagten Gummilager-Buchse um die Achse von dessen Befestigungs-Schraube oder dgl. blockierenden ("1.Alternative") oder auf ein bestimmtes Winkelsegment beschränkenden ("2.Alternative") Formschlusses zwischen dieser Gummilager-Buchse und dem Radträger bzw. einem - allgemein gesprochen - Gegenelement am Fahrzeug-Aufbau, in welches die besagte Schraube bzw. Befestigungs-Schraube eingedreht wird. Im weiteren wird der Einfachheit halber nur noch von einer erfindungsgemäßen Befestigung eines Schwingungs-Dämpfers an einem Radträger gesprochen, ohne hiermit die Möglichkeit einer analogen Dämpfer-Befestigung am Fahrzeug-Aufbau auszuschließen.

Für die Darstellung des besagten Formschlusses kann beispielsweise ein zusätzliches Bauelement in Form eines Passfederelements vorgesehen sein, welches sowohl mit dem Radträger als auch mit der Gummilager-Buchse eine entsprechend formschlüssige Verbindung eingeht bzw. den Drehfreiheitsgrad auf ein bestimmtes Winkelsegment begrenzt, indem das in Nuten sowohl am Radträger als auch an der Gummilager-Buchse eingreifende Passfederelement um ein entsprechendes Maß kürzer oder kleiner als zumindest eine dieser Nuten ist. Kein solches zusätzliches Bauelement (in Form eines Passfederelements oder dgl.) wird benötigt, wenn die besagte formschlüssige Blockade-Maßnahme durch eine geeignete hinsichtlich der Drehachse der besagten Schraube oder dgl. ("Befestigungs-Schraube" der Gummilager-Buchse am Radträger bzw. am Fzg.-Aufbau) nicht rotationssymmetrische Formgebung der einander zugewandten und zumindest abschnittsweise ineinander eingreifenden Anlageflächen von besagter Gummilager-Buchse und Radträger gebildet ist, wobei auch hier entweder eine formschlüssige Verbindung ohne Drehfreiheitsgrad im Sinne einer Blockade (= 1.Alternative) oder eine formschlüssige Beschränkung (= 2.Alternative) des besagten Drehfreiheitsgrades auf ein bestimmtes Winkelsegment dargestellt werden kann.

Nach einer bevorzugten Ausführungsform kann eine solche nicht rotationssymmetrische Formgebung direkt beim Herstellungsprozess zumindest eines der betroffenen Bauteile erzeugt werden, und zwar vorzugsweise an der durch Fließpressen hergestellten Gummilager-Buchse, an welche eine Nase oder dgl. angeformt werden kann, die in eine in den Radträger bspw. durch Fräsen eingebrachten (und nach der genannten zweiten Alternative der vorliegenden Erfindung zumindest geringfügig größeren) Nut zur Darstellung der gewünschten Formschluss-Blockade (1.Alternative) oder formschlüssigen Beschränkung auf ein bestimmtes Winkelsegment (2. Alternative) eingreift. Selbstverständlich sind dabei die Begriffe "Nase" und "Nut" allgemein oder nur beispielhaft zu verstehen und selbstverständlich können Nase und Nut auch umgekehrt vorgesehen sein, nämlich die Nase am Radträger und die Nut an der Gummilagerbuchse. Ferner sind beliebige andere nicht rotationssymmetrische Formgebungen möglich, so beispielsweise in Form eines Vierkants oder Sechskants oder eines Zweiflachs.

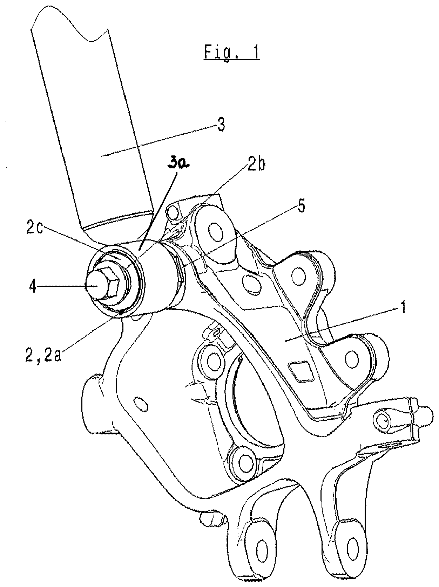

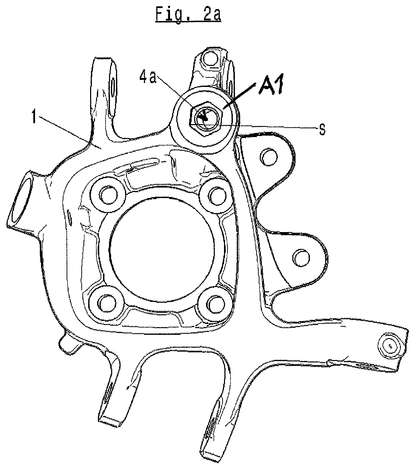

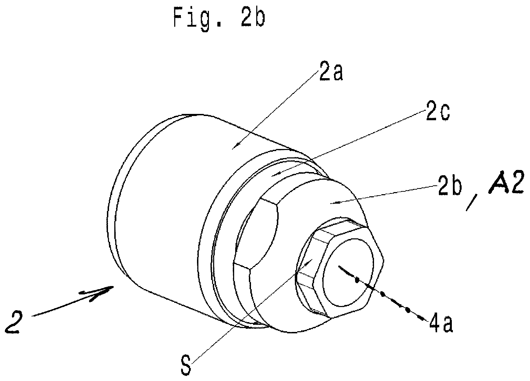

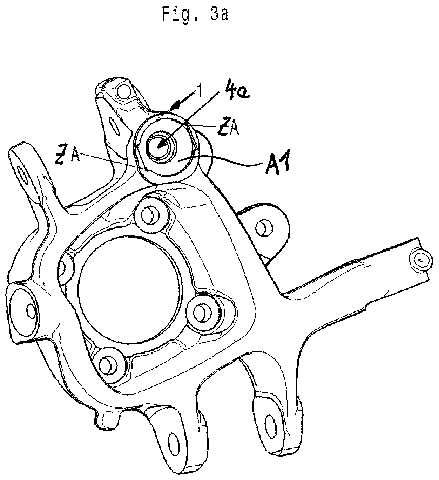

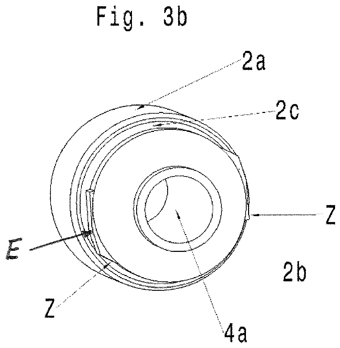

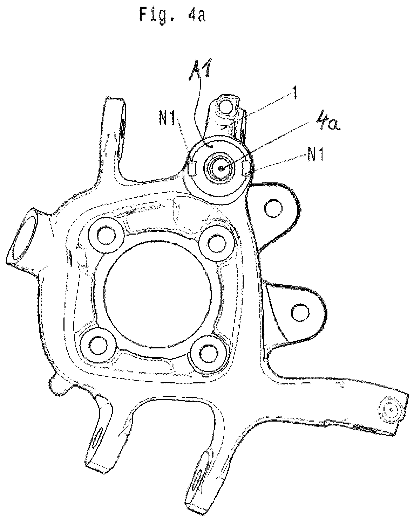

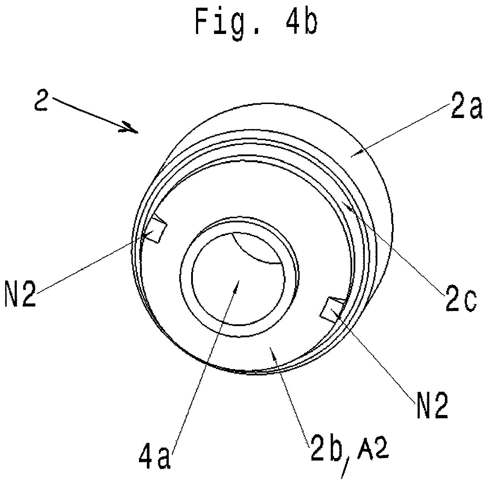

Die beigefügten Figuren zeigen verschiedene Ausführungsbeispiele der vorliegenden Erfindung, wobei in sämtlichen Figuren gleiche Teile mit den gleichen Bezugsziffern gekennzeichnet sind. Dabei zeigt **Figur 1** eine räumliche Teilansicht eines Radträgers 1 mit angebautem Gummilager 2, welches einen Schwingungsdämpfer 3, von welchem man nur den dem Gummilager 2 direkt benachbarten Teil sieht, trägt bzw. über welches der Dämpfer 3 am Radträger 1 befestigt ist. **Figur 2a** zeigt als ein zweites Ausführungsbeispiel eine Ansicht eines Radträgers 1, an dem das in **Figur 2b** dargestellte Gummilager 2 befestigt wird. Ähnlich diesen Figuren 2a, 2b ist in den **Figuren 3a****,** **3b** ein drittes Ausführungsbeispiel und in den **Figuren 4a****,** **4b** ein viertes Ausführungsbeispiel dargestellt, wobei nochmals darauf hingewiesen sei, dass anstelle des Radträgers (2) auch ein geeigneter Abschnitt des Fahrzeug-Aufbaus stehen kann, an welchem der Dämpfer (3) über ein Gummilager (2) in entsprechender erfindungsgemäßer Weise befestigt ist. Im Übrigen ist selbstverständlich auch bei den im weiteren erläuterten Ausführungsbeispielen das dem Radträger (1) gegenüberliegende Ende des Schwingungs-Dämpfer (3) am Fahrzeug-Aufbau befestigt, jedoch dort in üblicher (und somit nicht erfindungsgemäßer) Weise, wobei der Dämpfer (3) vorzugsweise Bestandteil einer Dämpfer-Tragfeder-Einheit ist, die weiterhin eine nicht gezeigte Tragfeder aufweist und gesamthaft in einem sog. Stützlager am Fzg.-Aufbau abgestützt ist.

Nun zunächst auf **Figur 1** Bezug nehmend erkennt man ein Gummilager 2, an dessen Außen-Buchse 2a ein Schwingungsdämpfer 3 mit seinem Lagerauge 3a abgestützt ist und dessen Innen-Buchse 2b mittels einer Schraube 4 am Radträger 1 befestigt, d.h. angeschraubt bzw. gegenüber diesem verspannt ist. Zwischen den beiden Buchsen 2a, 2b befindet sich wie üblich ein im Querschnitt ringförmiges Elastomerelement 2c. Die funktional mit der Schraube 4 zusammen wirkende Innen-Buchse 2b liegt mit ihrem dem Radträger 1 zugewandten Endabschnitt auf dem entsprechend gestalteten Anlagebereich des Radträgers 1 auf und es ist in den einander zugewandten Anlageflächen der Innen-Buchse 2b und des Radträgers 1 in Richtung der Achse (Längsachse, Drehachse) der Schraube 4 betrachtet einander gegenüberliegend jeweils zumindest eine Nut vorgesehen, in die ein eingelegtes Passfederelement 5 solchermaßen eingreift, dass entweder der Drehfreiheitsgrad der Innen-Buchse 2b des Gummilagers 2 bezüglich der Schraube 4 bzw. deren Achse durch Formschluss über dieses Passfederelement 5 blockiert ist (1.Alternative) oder der besagte Drehfreiheitsgrad durch Formschluss über dieses Passfederelement 5 auf ein bestimmtes geringes Winkelsegment beschränkt ist (2.Alternative). Dabei können - was in Fig.1 nicht sichtbar ist - in den einander zugewandten Anlageflächen jeweils zwei Nuten mit eingelegtem Passfederelement 5 einander bezüglich der Achse der Schraube 4 gegenüberliegend vorgesehen sein.

Bezüglich der vorhergehend genannten 1.Alternative ist der Montageprozess ohne weitere ausführliche Erläuterung verständlich, indem nämlich der Dämpfer 3 gegenüber dem Radträger 1 ausschließlich in einer solchen Winkelposition (hinsichtlich einer Verdrehung um die Achse der Schraube 4 betrachtet) am Radträger 1 korrekt befestigt werden kann, dass das oder die Passfederelement(e) 5 in die zugehörigen Nuten sowohl am Radträger 1 als auch an der Innen-Buchse 2b eingreifen. Gemäß der 2.Alternative kann zunächst eine Vormontage erfolgen, im Rahmen derer der Dämpfer 3 bzw. dessen Innen-Buchse 2b mit dem Passfederelement 5 locker, d.h. noch nicht endgültig mittels der Schraube 4 verspannt an den Radträger 1 angeflanscht wird, wobei der Dämpfer 3 noch um das besagte Winkelsegment verdrehbar ist, welches Winkelsegment durch das Größenverhältnis zwischen dem Passfederelement 5 und den genannten Nuten am Radträger 1 sowie an der Innen-Buchse 2b, in welche dieses Passfederelement 5 im Rahmen dieser Vormontage bereits eingreift, bestimmt ist. Im Rahmen dieser Vormontage wird die Schraube 4 zwar teilweise eingeschraubt, aber noch nicht endgültig festgezogen. Im folgenden Montageschritt wird dann der Dämpfer 3 mit seiner Innen-Buchse 2b bis zu einem durch das Passfederelement 5 sowie die genannten Nuten gebildeten Anschlag verdreht und daraufhin die Schraube 4 vollständig angezogen, so dass nun der Dämpfer 3 endgültig am Radträger 1 befestigt und dabei wie gewünscht bezüglich des Radträgers 1 positioniert ist. Der genannte Anschlag ist dabei wie im Patentanspruch 2 angegeben durch die Formgebung der besagten Nuten und des Passfederelements 5 festgelegt. Diese gestufte Montage mit der beschriebenen Vormontage, dem daraufhin erfolgenden geringfügigen Verdrehen des Dämpfers 3 und dem abschließenden Festziehen und damit endgültigen Positionieren des Dämpfers 3 in seiner Soll-Position ist für einen solchen Fügeprozess zwischen dem Fahrzeug-Aufbau und dem Achsträger oder dgl. (im Rahmen der eingangs genannten "Hochzeit") vorteilhaft, bei welchem der Dämpfer 3 zunächst nur am Fahrzeug-Aufbau befestigt ist, während sich der Radträger 1 am Achsträger befindet. Bei einem solchen Fügeprozess mit am Fahrzeug-Aufbau vormontiertem Dämpfer 3 und im Rahmen der "Hochzeit" zur Unterseite des Fahrzeug-Aufbaus hingeführtem Achsträger mit Radträgern 1 ist es vorteilhaft, wenn der am Fahrzeug-Aufbau hängende Dämpfer 3 zunächst nur locker mit dem Radträger 1 verbunden wird und erst danach mit gewissem Kraftaufwand geringfügig in die Soll-Position verdreht wird.

In den **Figuren 2a****,** **2b** sind für das zweite (ebenso wie die folgenden) Ausführungsbeispiel(e) der Radträger 1 und insbesondere der für das Gummilager 2 vorgesehene Anlagebereich des Radträgers 1 sowie das Gummilager 2 voneinander getrennt räumlich dargestellt, wobei die in Fig. 2b sichtbare vordere Seite des Gummilagers 2 dessen Anlagefläche A2 am Radträger 1 ist. Man erkennt in Fig.2a, dass im Radträger 1 eine konkave kugelsegmentförmige Aufnahme A1 für die abschnittsweise in Form eines konvexen Kugelsegments ausgebildete Anlagefläche A2 der Innen-Buchse 2b des Gummilagers 2 vorgesehen ist, wobei der Pfeil 4a in Fig.2a auf den Durchstoßpunkt der Drehachse 4a (vgl. Fig.2b) der hier nicht gezeigten Befestigungs-Schraube (4) durch die Zeichenebene zeigt. Bei diesem Ausführungsbeispiel nach den Figuren 2a, 2b ist einem weiteren neben den genannten Kugelsegmenten der Aufnahme A1 und der Anlagefläche A2 liegenden Bereich der einander zugewandten Anlagefläche A2 bzw. Aufnahme A1 jeweils ein Sechskant S als eine bezüglich der Drehachse 4a der hier nicht dargestellten Schraube (4) nicht rotationssymmetrische Formgebung ausgeformt bzw. angeformt, wobei die beiden Sechskante S beim Zusammenbau ineinander greifen, so dass der Drehfreiheitsgrad der Gummilager-Innen-Buchse 2b um die Achse 4a der besagten Befestigungs-Schraube (4) durch Formschluss blockiert ist. Dieses Ausführungsbeispiel fällt somit unter die besagte 1.Alternative der vorliegenden Erfindung.

Die Ausführungsform nach den **Figuren 3a****,** **3b** ist für beide Alternativen darstellbar, wobei an der Innen-Buchse 2b des Gummilagers 2 ausgehend von der Anlagefläche A2 näher am Elastomerelement 2c liegend als beim Ausführungsbeispiel nach **Fig.2a****,** **2b** zwei einander gegenüberliegende Zweiflachs Z (in Form von Ehebungen) vorgesehen sind, für welche am Radträger 1 geeignete Aussparungen ZA vorgesehen sind, in welchen das jeweils zugeordnete Zweiflach Z zum Liegen kommt, wenn die Innen-Buchse 2b des Gummilagers 2 wie gewünscht bezüglich des Radträgers 1 positioniert oder vorpositioniert ist. Dabei kann jedes Zweiflach Z in seiner Form exakt an die zugehörige Aussparung ZA angepasst sein, so dass der Drehfreiheitsgrad der Gummilager-Innen-Buchse 2b um die Achse 4a der Schraube (4) durch Formschluss blockiert ist (1.Alternative). Gemäß der figürlich dargestellten 2.Alternative der vorliegenden Erfindung ist das Zweiflach Z nicht nur kleiner als die zugehörige rechteckige Aussparung ZA im Radträger 1, sondern weist einen zusätzlichen mittigen Eckpunkt E auf und ist somit in näherungsweise giebelförmig, womit sich ein auf ein bestimmtes Winkelsegment beschränkter Drehfreiheitsgrad für den Dämpfer 3 bezüglich des Radträgers 1 ergibt, wenn das jeweilige Zweiflach Z in der jeweiligen Aussparung ZA liegt und der Dämpfer 3 noch locker mit dem Radträger 1 verbunden ist. Der besagte Anschlag für diese 2.Alternative wird dabei auch durch das Zusammenwirken des Zweiflachs Z mit der zugehörigen Aussparung ZA gebildet, indem nach geringfügigem Verdrehen innerhalb des besagten bestimmten Winkelsegments die Aussparung ZA gegenüber dem Zweiflach Z kein weiteres Verdrehen erlaubt. Im übrigen weist auch in Fig.3a der Pfeil 4a auf den Durchstoßpunkt der Schrauben-Drehachse 4a durch die Zeichenebene.

Beim Ausführungsbeispiel nach den **Figuren 4a****,** **4b** sind in den bereits genannten Kugelsegment-Abschnitt der Aufnahme A1 des Radträgers 1 für die Anlagefläche A2 der Gummilager-Innen-Buchse 2b einander bezüglich der Drehachse 4a diametral gegenüberliegend durch Fräsen zwei Nuten N1 eingebracht, in die Nasen N2, die auf dem Kugelsegment-Abschnitt der Anlagefläche A2 der Gummilager-Innen-Buchse 2b ausgeformt sind, eingreifen, um die besagte Formschluss-Blockade oder formschlüssige Beschränkung des Drehfreiheitsgrades auf ein bestimmtes Winkelsegment darzustellen. Für die letztgenannte 2.Alternative sind die Nasen N2 in Umfangsrichtung (bezüglich der Drehachse 4a) betrachtet entsprechend schmäler oder kürzer als die Nuten N1, um eine Verdrehung um ein bestimmtes Winkelsegment (beispielsweise in der Größenordnung von 15°) zu ermöglichen. Dabei sind die Nasen N2 vorteilhafterweise direkt beim Herstellprozess der Gummilager-Innen-Buchse 2b durch Fließpressen geformt.

## Patentansprüche

1. Befestigungsanordnung eines Schwingungs-Dämpfers (3) an einem Radträger (1) und/oder am Aufbau eines Fahrzeugs über ein Gummilager (2) mittels einer Schraube (4) oder dgl., durch die eine der beiden Buchsen (2b) des Gummilagers in den drei Längsfreiheitsgraden bezüglich des Radträgers (1) oder des Fahrzeug-Aufbaus festgelegt ist, wobei an der besagten Gummilager-Buchse (2b) sowie am Radträger (1) und/oder am Fahrzeug-Aufbau eine Maßnahme vorgesehen ist, durch welche der Drehfreiheitsgrad dieser Gummilager-Buchse (2) um die Achse (4a) der Schraube (4) oder dgl. durch Formschluss blockiert oder auf ein bestimmtes Winkelsegment beschränkt ist, **dadurch gekennzeichnet, dass** sich bei Veränderungen des Höhenstandes des Radträgers gegenüber dem Fahrzeugaufbau dessen durch Sturzwinkel, Spurwinkel und Nachlaufwinkel beschriebene Position ändert,
und dass die besagte formschlüssige Blockade-Maßnahme oder Beschränkung des Drehfreiheitsgrades solchermaßen vorgesehen ist, dass bei Montage des Schwingungs-Dämpfers (3) am Radträger (1) bzw. am Fahrzeug-Aufbau ohne Belastung des Radträgers (1) durch den Fahrzeug-Aufbau der Schwingungs-Dämpfer (3) für ein exaktes Verspannen durch die Schraube (4) oder dgl. gegenüber dem Radträger (1) und/oder dem Fzg.-Aufbau im Falle der Blockade solchermaßen positioniert ist oder im Falle der Beschränkung des Drehfreiheitsgrades an einem Anschlag der formschlüssigen Beschränkung solchermaßen positionierbar ist, dass mit Belastung durch den Fahrzeug-Aufbau das Gummilager (2), genauer dessen Elastomerelement (2c), in Konstruktionslage bezüglich des genannten Drehfreiheitsgrades zumindest annähernd spannungsfrei ist.

2. Befestigungsanordnung nach Anspruch 1, **dadurch gekennzeichnet, dass** die besagte formschlüssige Blockade-Maßnahme oder Beschränkung des Drehfreiheitsgrades durch zumindest ein zwischen der besagten Gummilager-Buchse (2b) und dem Radträger (1) oder dem Fahrzeug-Aufbau eingesetztes Passfederelement (5) gebildet ist.

3. Befestigungsanordnung nach einem der vorangegangenen Ansprüche, **dadurch gekennzeichnet, dass** die besagte formschlüssige Blockade-Maßnahme oder Beschränkung des Drehfreiheitsgrades durch eine geeignete hinsichtlich der Drehachse (4a) der Schraube (4) oder dgl. nicht rotationssymmetrische Formgebung der einander zugewandten Anlageflächen (A2, A1) von besagter Gummilager-Buchse (2b) und Radträger (1) oder des Fahrzeug-Aufbaus gebildet ist.

4. Befestigungsanordnung nach Anspruch 3, wobei in die Anlagefläche oder Aufnahme (A1) des Radträgers (1) zumindest eine Nut (N1) oder dergleichen eingeformt, insbesondere eingefräst ist, in welche eine Nase (N2) oder dgl. der besagten Gummilager-Buchse (2b) hineinragt, welche zusammen mit der Herstellung der Form der Anlagefläche (A2) dieser Gummilager-Buchse (2b) durch Fließpressen hergestellt ist.

## Claims

1. An arrangement for fastening a vibration damper (3) to a wheel carrier (1) and/or to the body of a vehicle via a rubber mounting (2) by means of a screw (4) or the like, by means of which one of the two bushings (2b) of the rubber mounting is determined in the three degrees of longitudinal freedom in relation to the wheel carrier (1) or vehicle body, wherein a measure is provided on said rubber mounting bushing (2b) and on the wheel carrier (1) and/or on the vehicle body, by means of which measure the degree of rotary freedom of said rubber mounting bushing (2) about the axis (4a) of the screw (4) or the like is blocked or limited to a certain angle segment by a form fit,
**characterised in that**, in the event of changes to the height level of the hub carrier relative to the vehicle body, the position thereof described by camber angle, toe angle and castor angle changes, and **in that** said form-fitting blocking measure or limitation of the degree of rotary freedom is provided such that, when the vibration damper (3) is mounted on the wheel carrier (1) or on the vehicle body without the wheel carrier (1) being loaded by the vehicle body, the vibration damper (3) is positioned for exact clamping by means of the screw (4) or the like in relation to the wheel carrier (1) and/or the vehicle body in the case of the blocking of the degree of rotary freedom, or in the case of the limitation of the rotary degree of freedom can be positioned at a stop of the form-fitting limitation such that, with loading by the vehicle body, the rubber mounting (2), more especially the elastomer element (2c) thereof, is at least approximately stress-free in relation to said rotary degree of freedom when in the design position.

2. A fastening arrangement according to claim 1, **characterised in that** said form-fitting blocking measure or limitation of the rotary degree of freedom is formed by at least one feather key element (5) inserted between said rubber mounting bushing (2b) and the wheel carrier (1) or the vehicle body.

3. A fastening arrangement according to either one of the preceding claims, **characterised in that** said form-fitting blocking measure or limitation of the rotary degree of freedom is formed by a non-rotationally symmetrical shaping, which is suitable in respect of the rotary axis (4a) of the screw (4) or the like, of the contact faces (A2, A1), facing one another, of said rubber mounting bushing (2b) and wheel carrier (1) or vehicle body.

4. A fastening arrangement according to claim 3, wherein there is at least one groove (N1) or the like formed, more especially milled, in the contact face or receptacle (A1) of the wheel carrier (1), with a lug (N2) or the like of said rubber mounting bushing (2b) protruding into said groove or the like, which lug or the like is produced together with the production of the form of the contact face (A2) of this rubber mounting bushing (2b) by impact extrusion.

## Revendications

1. Dispositif de fixation d'un amortisseur de vibrations (3) sur un support de roue (1) et/ou sur la carrosserie d'un véhicule par l'intermédiaire d'un palier en caoutchouc (2) au moyen d'une vis (4) ou similaire par laquelle l'un des deux coussinets (2b) du palier en caoutchouc est fixé dans les trois degrés de liberté longitudinale par rapport au support de roue (1) ou à la carrosserie du véhicule, sur ce coussinet (2b) du palier en caoutchouc et sur le support de roue (1) et/ou sur la carrosserie du véhicule étant prévu un moyen par lequel le degré de liberté de rotation de ce coussinet du palier en caoutchouc (2b) autour de l'axe (4a) de la vis (4) ou similaire est bloqué ou limité sur un segment angulaire déterminé par une liaison par la forme,
**caractérisé en ce que**
en présence de variations de l'état en hauteur du support de roue par rapport à la carrosserie du véhicule sa position décrite par l'angle de piqué, l'angle de pincement et l'angle de chasse se modifie, et le moyen de blocage ou de limitation du degré de liberté de rotation par une liaison par la forme est réalisé de sorte que, lors d'un montage de l'amortisseur de vibrations (3) sur le support de roue (1) ou sur la carrosserie du véhicule sans sollicitation du support de roue (1) par la carrosserie du véhicule, l'amortisseur de vibrations (3) soit positionné pour permettre un serrage exact par la vis (4) ou similaire par rapport au support de roue (1) et/ou à la carrosserie du véhicule dans le cas d'un blocage ou dans le cas d'une limitation de la liberté de rotation puisse être positionné contre une butée de la limitation par une liaison par la forme de façon telle que, avec une sollicitation par la carrosserie du véhicule le palier en caoutchouc (2) ou plus précisément son élément élastomère (2c) soit au moins essentiellement exempt de tension dans la position de construction par rapport à la liberté de rotation susmentionnée.

2. Dispositif de fixation conforme à la revendication 1,
**caractérisé en ce que**
le moyen de blocage ou de limitation du degré de liberté de rotation par une liaison par la forme est formé par au moins un élément élastique d'ajustage (5) inséré entre le coussinet (2b) du palier en caoutchouc et le support de roue (1) ou la carrosserie du véhicule.

3. Dispositif de fixation conforme à l'une des revendications précédentes,
**caractérisé en ce que**
le moyen de blocage ou de limitation du degré de liberté de rotation par une liaison par la forme est formée par une mise en forme sans symétrie de rotation adaptée par rapport à l'axe de rotation (4a) de la vis (4) ou similaire, des surfaces d'appui (A1, A2) tournées l'une vers l'autre du coussinet (2b) du palier en caoutchouc et du support de roue (1) ou de la carrosserie du véhicule.

4. Dispositif de fixation conforme à la revendication 3,
dans lequel est formée, en particulier, fraisée dans les surfaces d'appui ou le logement (A1) du support de roue (1) au moins une rainure (N1) ou similaire dans laquelle pénètre un bec (N2) ou similaire du coussinet (2b) du palier en caoutchouc qui, est obtenu par formage par fluage conjointement à l'obtention de la forme de la surface d'appui (A2) de ce coussinet (2b) du palier en caoutchouc.
